**Europäisches Patentamt**

**European Patent Office**

**Office européen des brevets**

(19)

(11) Veröffentlichungsnummer: **0 198 799**
**B1**

(12) # EUROPÄISCHE PATENTSCHRIFT

(45) Veröffentlichungstag der Patentschrift:
27.12.89

(21) Anmeldenummer: 86810167.6

(22) Anmeldetag: 09.04.86

(51) Int. Cl.⁴: **B 60 L 13/02,** H 02 P 7/622

(54) Steuereinrichtung für einen elektromagnetischen Linearmotor.

(30) Priorität: 11.04.85 CH 1554/85

(43) Veröffentlichungstag der Anmeldung:
22.10.86 Patentblatt 86/43

(45) Bekanntmachung des Hinweises auf die Patenterteilung:
27.12.89 Patentblatt 89/52

(84) Benannte Vertragsstaaten:
AT BE CH DE FR GB IT LI LU NL SE

(56) Entgegenhaltungen:
US-A-3 792 665
US-A-3 904 942
US-A-4 455 521

(73) Patentinhaber: **Gilgen AG, Freiburgstrasse 34, CH-3150 Schwarzenburg (CH)**

(72) Erfinder: **Gilgen, Jakob, Voremberg 1, CH- 3150 Schwarzenburg (CH)**

(74) Vertreter: **Schweizer, Hans, Bovard AG Patentanwälte VSP Optingenstrasse 16, CH- 3000 Bern 25 (CH)**

EP 0 198 799 B1

**Beschreibung**

Die Erfindung bezieht sich auf eine Steuereinrichtung gemäss dem Oberbegriff des Patentanspruches 1.

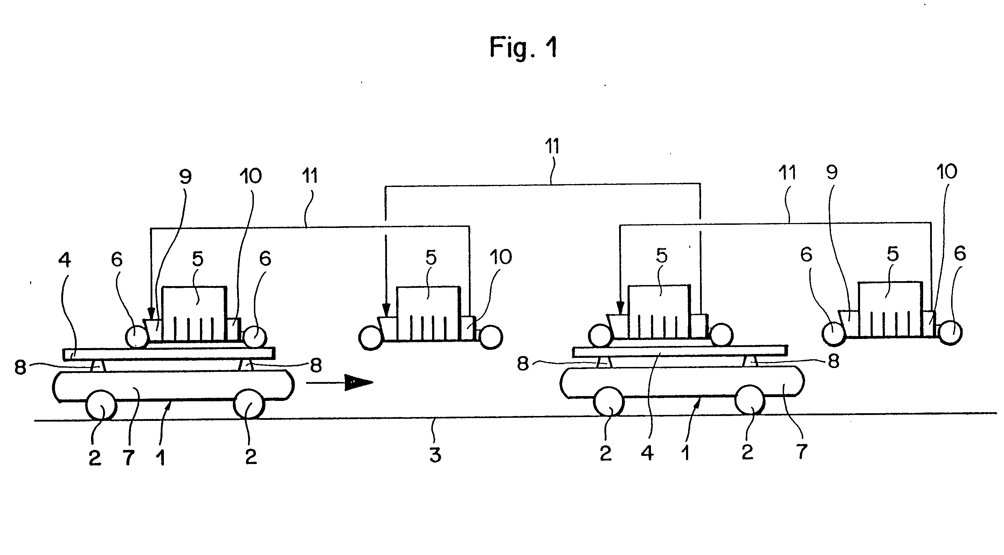

Es ist bekannt, elektromagnetische Linearmotoren zum Antrieb von auf Schienen verfahrbaren Fahrwerken zu verwenden. Der Linearmotor funktioniert im wesentlichen wie ein Drehstrom-Kurzschlussläufermotor, bei dem ein rotierendes Feld den Anker antreibt. Wird ein Drehstrommotor in Achsrichtung aufgeschnitten und in einer Ebene ausgebreitet, entsteht ein flacher Rotor und ein sogenannter ebener, mit Wicklungen versehener Induktor, der ein lineares Wanderfeld erzeugt. Solche Induktionskämme werden benachbart zu den Schienen und entlang derselben in einem bestimmten Abstand gegenüber den Schienen angeordnet. An jedem Fahrwerk ist eine als flacher Anker wirkende Platte so angeordnet, dass diese Platte in einem möglichst kleinen Abstand an den Induktionskämmen vorbeibeweglich ist. Durch Erregen der Induktionskämme wird berührungslos eine Schubkraft auf das Fahrwerk übertragen, die bei stillstehendem Fahrwerk am grössten ist und angenähert umgekehrt proportional zur Fahrgeschwindigkeit abnimmt. Zwei so ausgebildete Fahrwerke 1 sind in der Fig. 1 sehr vereinfacht und schematisch dargestellt. Das Fahrwerk 1 besitzt Laufräder 2, die auf Schienen 3 abrollen. Auf jedem der Fahrwerke 1 ist je eine als flacher Anker wirkende Platte 4 befestigt, die sich parallel zur Schiene 3 erstreckt. Oberhalb der Schiene 3 und in einem definierten Abstand sind die Induktionskämme 5 ortsfest angeordnet. Die Wicklungen der Induktionskämme 5 und deren Anschlussleitungen sind in der Fig. 1 nicht dargestellt. Da in einem Linearmotor nicht nur Kräfte in der horizontalen Bewegungsrichtung des Wanderfeldes sondern auch anziehende Kräfte zwischen dem Induktionskamm 5 und der Platte 4 wirksam sind, ist am vorderen und am hinteren Ende jedes Induktionskammes 5 je eine Luftspaltdistanzrolle 6 montiert, die einen gleichbleibenden Luftspalt zwischen dem Induktionskamm 5 und der darunter befindlichen Platte 4 gewährleisten. Zwischen dem Fahrwerkrahmen 7 jedes Fahrwerkes 1 und der zugeordneten Platte 4 sind elastische Elemente 8 angeordnet, durch welche die Platte 4 leicht an die Luftspaltdistanzrollen 6 angepresst wird.

Als Induktionskämme können auch Einphasen-Induktionskämme verwendet werden, die beispielsweis je vier Nuten aufweisen, in denen sich jeweilen eine Haupt- und eine über einen Kondensator gespiesene Nebenwicklung befindet, welche Wicklungen das Wanderfeld erzeugen. Um den Stromverbrauch an elektrischer Energie so klein als möglich zu halten, ist es bekannt, jeden Induktionskamm nur dann und so lange zu erregen, als er ein Fahrwerk anzutreiben hat. Die Erregung der Wicklungen der Induktionskämme wird daher vom Fahrwerk über einen sich an jedem Induktor befindlichen Linearmotorschalter 9 berührungslos ein- und ausgeschaltet. Ein am hinteren Ende jedes Induktionskammes 5 angeordneter Sensor 10 ermöglicht in Verbindung mit dem Linearmotorschalter 9 ein schonendes Stapeln der Fahrwerke, d.h. ein sanftes Aufeinanderstossen derselben. Der Sensor 10 des nachfolgenden Induktionskammes 5 ist über je eine Leitung 11 mit dem Linearmotorschalter 9 des vorangehenden Induktionskammes 5 verbunden, so dass durch den Linearmotorschalter 9 der Induktionskamm 5 nur dann erregt werden kann, wenn sich keine Platte 4, d.h. kein Fahrwerk 1, unter dem nachfolgenden Induktionskamm 5 befindet.

In der US-A-3 904 942 ist eine Stromkreisanordnung zum Steuern eines mit einem Linearmotor angetriebenen Fahrzeuges beschrieben. Diese bekannte Stromkreisanordnung umfasst Mittel zum Berechnen der Position des Fahrzeuges aus der Spannung, dem Strom und der Frequenz an der Speisestelle des Linearmotors. Die zum Erfassen dieser Werte und zum Berechnen der Position aus diesen Werten notwendigen Mittel sind kompliziert und störanfällig.

Es ist Aufgabe der Erfindung, eine Steuereinrichtung der eingangs genannten Art zu schaffen, welche es ermöglicht, auf die an den Induktionskämmen angeordneten Linearmotorschalter und Sensoren bzw. auf komplexe Berechnungsmittel zu verzichten.

Die erfindungsgemässe Steuereinrichtung ist durch die im kennzeichnenden Teil des Patentanspruches 1 angeführten Merkmale gekennzeichnet.

Ausführungsbeispiele der erfindungsgemässen Steuereinrichtung sind in den abhängigen Patentansprüchen definiert.

Die Erfindung ist nachstehend mit Bezugnahme auf die Zeichnung beispielsweise näher erläutert, es zeigen

Fig. 1 die schematische Darstellung von Fahrwerken, die mit Hilfe von bekannten elektromagnetischen Linearmotoren längs einer Schiene angetrieben werden,

Fig. 2 ein einfaches Blockschema der erfindungsgemässen Steuereinrichtung,

Fig. 3 das Prinzipschema für die Erzeugung der Messignale,

Fig. 4 ein Blockschema der Steuereinrichtung nach der Fig. 2 mit mehr Einzelheiten,

Fig. 5 das Schaltschema eines Überwachungsstromkreises der Steuereinrichtung nach der Fig. 2 bzw. 4,

Fig. 6 das Schaltschema eines Verzögerungsstromkreises der Steuereinrichtung gemäss der Fig. 2 bzw. 4, und

Fig. 7 die Hintereinanderschaltung von mehreren Steuereinrichtungen gemäss der Fig. 2.

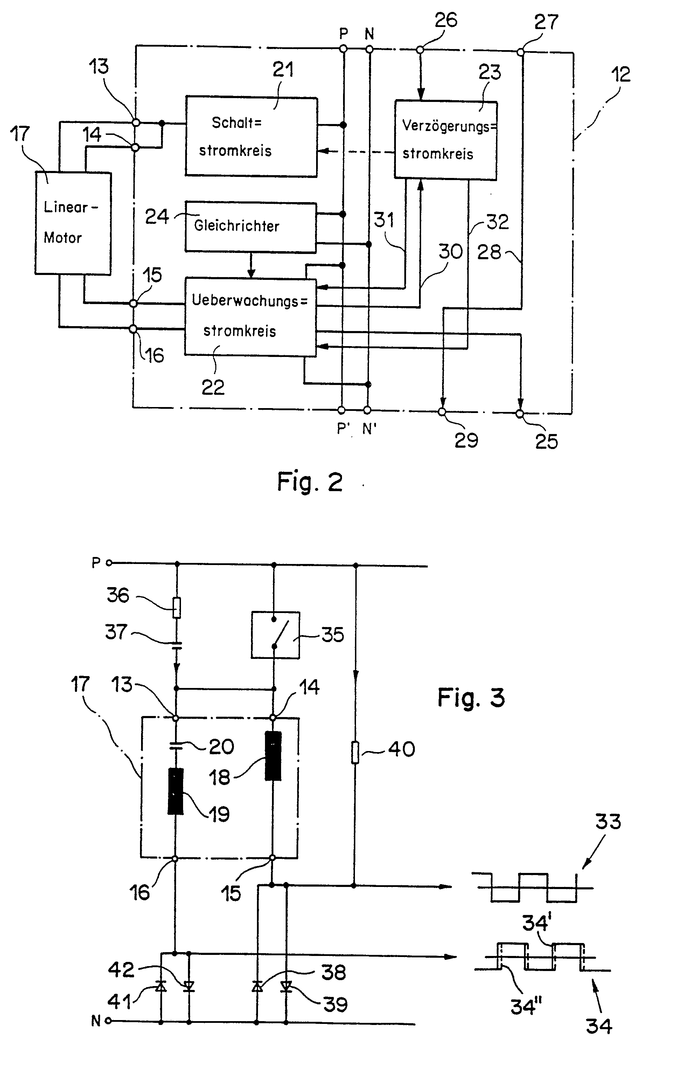

In der Fig. 2 ist das Blockschema eines Ausführungsbeispiels der erfindungsgemässen Steuereinrichtung 12 dargestellt. An vier Anschlussklemmen 13, 14, 15 und 16 ist ein Linearmotor 17 angeschlossen, welcher, wie aus der Fig. 3 ersichtlich, eine Hauptwicklung 18, eine Hilfswicklung 19 und einen zur Hilfswicklung 19 in Reihe geschalteten Kondensator 20 enthält. Die Steuereinrichtung umfasst einen Schaltstromkreis 21 zum Ein-bzw. Ausschalten des Linearmotors 17, einen Überwachungsstromkreis 22 zum Überwachen der durch die Hauptwicklung 18 und die Hilfswicklung 19 des Linearmotors 17 fliessenden Ströme, einen Verzögerungsstromkreis 23 zum verzögerten Einschalten des Linearmotors 17 und einen Gleichrichter 24 zum Erzeugen der Betriebsspannung für den Überwachungsstromkreis 22 und den Verzögerungsstromkreis 23.

Weiter sind Anschlussklemmen P und N vorhanden, an die die Phase und der Null-Leiter eines Wechselstromversorgungsnetzes 220 V angelegt werden. Mit den Anschlussklemmen P und N sind weitere Anschlussklemmen P' bzw. N' parallel geschaltet, damit die Wechselspannung 220 V an die nachfolgende Steuereinrichtung angeshclossen werden kann.

An einer Anschlussklemme 25 erscheint ein Ausgangssignal des Überwachungsstromkreises 22, wenn sich eine nicht dargestellte Platte, die der Platte 4 in der Fig. 1 entspricht, im Wirkbereich des Linearmotors 17 befindet. Das genannte Ausgangssignal wird nachstehend als "Besetztsignal" bezeichnet.

Über eine Anschlussklemme 26 kann dem Verzögerungsstromkreis 23 ein von einer anderen Steuereinrichtung erzeugtes Besetztsignal zugeführt werden. Eine Anschlussklemme 27 ist über einen Leiter 28 mit einer Anschlussklemme 29 verbunden, über welche ein Besetztsignal von einer nachfolgenden Steuereinrichtung einer vorangehenden Steuereinrichtung zugeführt werden kann. Ein zum bereits genannten Ausgangssignal des Überwachungsstromkreises 22 komplementäres Ausgangssignal wird über einen Leiter 30 als Schaltsignal dem Verzögerungsstromkreis 23 zugeführt. Über Leitungen 31 und 32 gelangen vom Verzögerungsstromkreis 23 erzeugte und verzögerte Sperrsignale beim Einschalten bzw. Ausschalten des Linearmotors 17 zum Überwachungsstromkreis 22.

Die Fig. 3 zeigt das Prinzipschema zur Erzeugung der von durch die Hauptwicklung 18 und die Hilfswicklung 19 des Linearmotors 17 fliessenden Strömen abhängigen Messignale 33 und 34. In der Fig. 3 ist oberhalb des Linearmotors 17 ein Schaltmittel 35 des Schaltstromkreises 21 und unterhalb des Linearmotors 17 ein Teil des Überwachungsstromkreises 22 dargestellt. Zum Schutz des Schaltmittels 35 ist parallel dazu die Reihenschaltung eines Widerstandes 36 und eines Kondensators 37 geschaltet.

Wenn das Schaltmittel 35 elektrisch leitend ist, so fliesst einerseits von der Anschlussklemme P über das Schaltmittel 35 ein Strom durch die Hauptwicklung 18 und eine Antiparallelschaltung von zwei Dioden 38 und 39 zur Anschlussklemme N. Zusätzlich zu diesem Strom und auch im nichtleitenden Zustand des Schaltmittels 35 fliesst ein durch einen Widerstand 40 bestimmter Kompensationsstrom durch die zwei antiparallel geschalteten Dioden 38 und 39. An der genannten Antiparallelschaltung tritt eine Spannung auf, die von der Summe der beiden genannten Ströme abhängig ist. Diese Spannung ist das rechteckförmige Messignal 33. Andererseits fliesst ein Strom von der Anschlussklemme P über das Schaltmittel 35 durch die Reihenschaltung aus dem Kondensator 20 und der Hilfswicklung 19 und durch eine weitere aus zwei Dioden 41 und 42 bestehende Antiparallelschaltung zur Anschlussklemme N. Die über den antiparallel geschalteten Dioden 41 und 42 auftretende Spannung ist das rechteckförmige Messignal 34. Die Amplitude der Messignale 33 und 34 ist von der Charakteristik der verwendeten Dioden 38, 39 und 41, 42 abhängig und beträgt beispielsweise etwa 0,7 V.

Zu beachten ist, dass auch bei nichtleitendem Schaltmittel 35 ein Strom über die Reihenschaltung aus dem Widerstand 36 und dem Kondensator 37 sowohl durch die Hilfswicklung 19 als auch durch die Hauptwicklung 18 fliesst. Dies bedeutet, dass die Messignale 33 und 34 auch bei abgeschaltetem Schaltmittel 35 vorhanden sind. Die Rechteckform der Messignale 33 und 34 und deren Amplitude sind immer gleich. Hingegen ist die Phasenverschiebung zwischen diesen beiden Messignalen 33 und 34 vom jeweiligen Betriebszustand, d.h. ob sich eine der Platte 4 in der Fig. 1 entsprechende Platte im Wirkungsbereich des Linearmotors 17 befindet oder nicht, und dem Widerstandswert des Widerstandes 40 abhängig.

Der Wert des Widerstandes 40 wird so gewählt, dass die Phasenverschiebungsdifferenz zwischen den Messignalen 33 und 34 im ein- und ausgeschalteten Zustand des Schaltmittels 35 gleich gross ist, wenn die genannte Platte mit 50% des Wirkungsbereiches des Linearmotors 17 im Eingriff ist, d.h. wenn die vordere oder hintere Kante der Platte sich in der Mitte des Linearmotors 17 befindet. Das in der Fig. 3 mit vollem Strich dargestellte Messignal 34' tritt auf, wenn sich die genannte Platte nicht im Wirkungsbereich des Linearmotors 17 befindet, und das gestrichelt dargestellte Messignal 34" tritt auf, wenn sich die Platte im Wirkungsbereich befindet. Mit anderen Worten wird das aus dem die Hilfswicklung 19 durchfliessenden Strom abgeleitete Messignal 34" durch die Anwesenheit der Platte phasenverschoben.

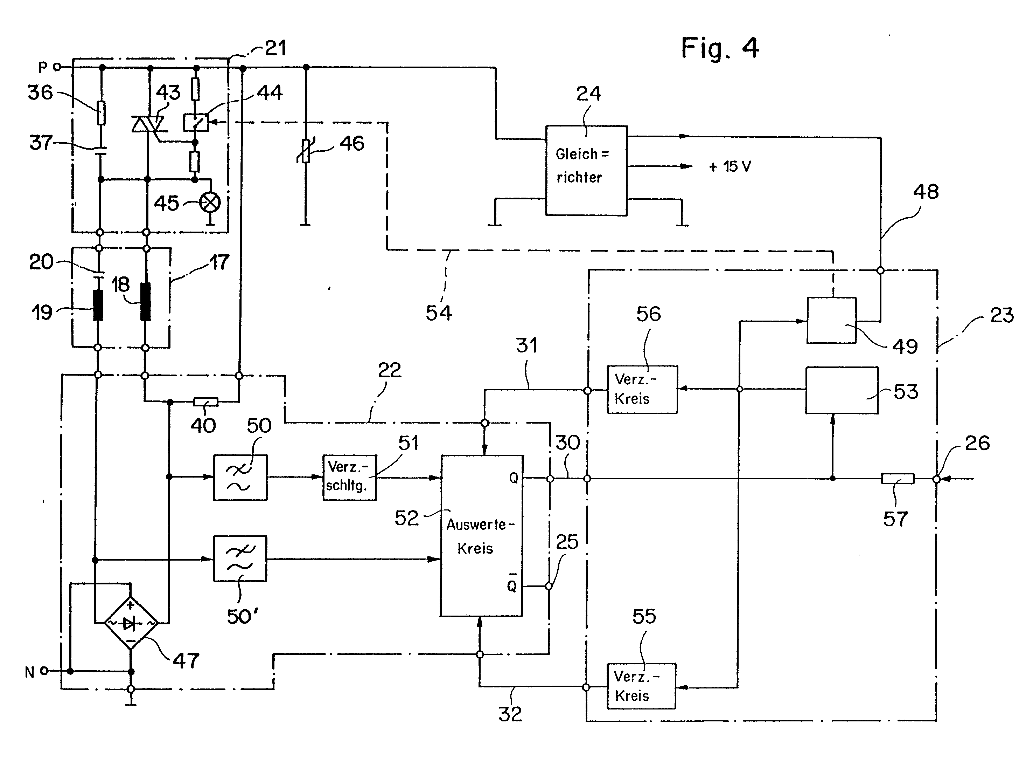

Die Fig. 4 zeigt das Schaltschema der Steuereinrichtung nach der Fig. 2. Der Schaltstromkreis 21 weist einen als Schaltmittel dienenden Triac 43 auf, an dessen Steuerelektrode über ein Steuermittel 44, das ein Schutzrohrkontakt oder der Empfänger eines Optokopplers sein kann, je nach Bedarf eine Steuerspannung angelegt wird. Weiter ist eine Signallampe 45 vorhanden, die aufleuchtet, wenn der Triac 43 leitend ist, und die anzeigt, wenn der Linearmotor 17 eingeschaltet ist.

Die Anschlussklemme N für den Nulleiter ist mit der Masse der Steuereinrichtung 12 verbunden und ein zwischen der Anschlussklemme P und der Masse der Steuereinrichtung 12 geschalteter PTC-Widerstand 46 dient als Schutz der Steuereinrichtung 12, wenn die Verbindung zwischen der Masse der Steuereinrichtung und dem Nulleiter fehlt.

Die mit Bezugnahme auf die Fig. 3 beschriebenen antiparallel geschalteten Dioden 38, 39 und 40, 42 sind in der in der Fig. 4 dargestellten Gleichrichterbrückenschaltung 47 enthalten, deren Gleichstromanschlüsse überbrückt und mit der Anschlussklemme N verbunden und deren Wechselstromanschlüsse an die Hauptwicklung 18 bzw. die Hilfswicklung 19 angeschlossen sind. Der Gleichrichter 24 liefert eine stabilisierte Betriebsspannung von 15 V für den Überwachungsstromkreis 22 und den Verzögerungsstromkreis 23 sowie eine Speisespannung von etwa 24 V, die über einen Leiter 48 einer Endstufe 49 des Verzögerungskreises 23 zugeführt wird.

Das an dem mit der Hauptwicklung 18 des Linearmotors 17 verbundenen Wechselstromanschluss der Gleichrichterbrückenschaltung 47 abgenommene Messignal 33 wird über ein Tiefpassfilter 50 und eine Verzögerungsschaltung 51 einem Auswertekreis 52 zugeführt. Das an dem mit der Hilfswicklung 19 verbundenen Wechselstromanschluss der Gleichrichterbrückenschaltung 47 abgenommene Messignal 34 wird über ein Tiefpassfilter 50' ebenfalls dem Auswertekreis 52 zugeführt. Auf dem Leiter 30, der mit dem Ausgang Q des Auswertekreises 52 verbunden ist, erscheint das binäre Signal "1", wenn sich die genannte Platte im Wirkungsbereich des Linearmotors 17 befindet, und das binäre Signal "0", wenn sich keine Platte im Wirkungsbereich des Linearmotors 17 befindet. An der Anschlussklemme 25, die mit dem Ausgang ̄Q des Auswertekreises 52 verbunden ist, treten gerade die entgegengesetzten binären Signale wie auf dem Leiter 30 auf.

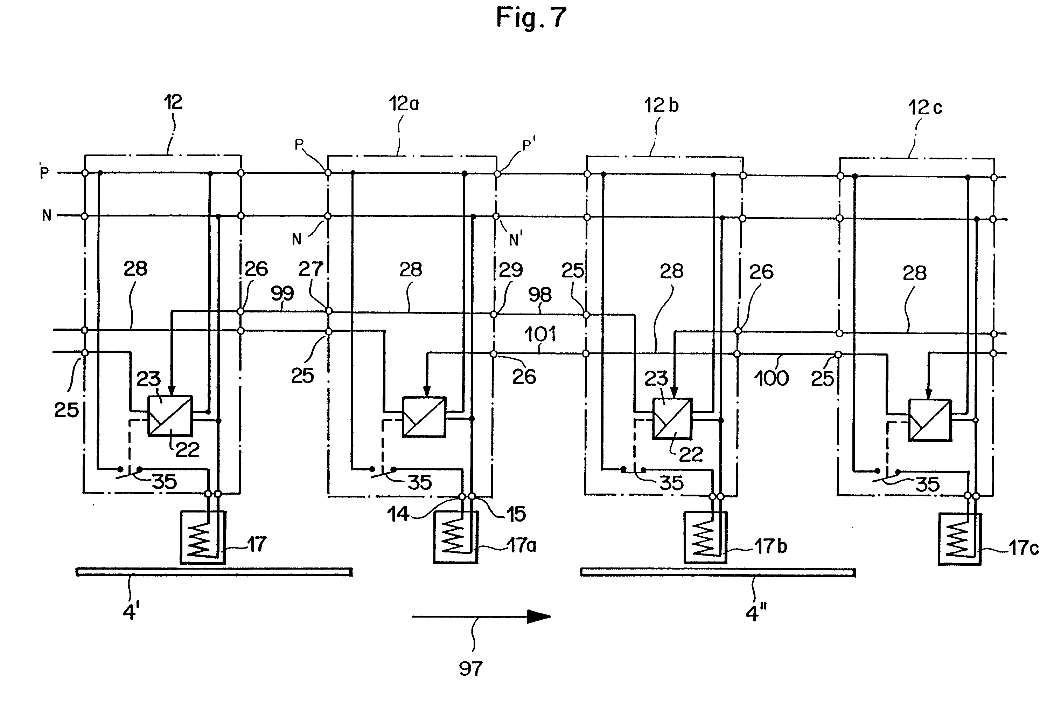

Das Schaltsignal auf dem Leiter 30 wird einem einstellbaren Einschaltverzögerungskreis 53 zugeführt, welcher ein um 0 bis 1,5 s verzögertes Signal an die Endstufe 49 abgibt, wenn dem Einschaltstromkreis 53 das binäre Signal "1" zugeführt wird. Die Endstufe 49 betätigt über den gestrichelt dargestellten Verbindungsweg 54 entweder mechanisch, magnetisch oder elektrisch das Steuermittel 44, welches den Triac 43 ansteuert, welcher der Hauptwicklung 18 und der Hilfswicklung 19 des Linearmotors 17 die Betriebsspannung zugeführt, nachdem der Einschaltverzögerungskreis das Signal für die Endstufe 49 erzeugt hat. Das an der Anschlussklemme 25 auftretende Signal kann, wie weiter unten mit Bezugnahme auf die Fig. 7 näher beschreiben, als Besetzsignal einer anderen Steuereinrichtung 12 zugeführt werden.

In Abhängigkeit des Ausgangssignals des Einschaltverzögerungskreis 53 wird durch einen Verzögerungskreis 55 ein Sperrsignal zum Auswertekreis 52 zurückgeführt, um denselben während etwa 0,2 s zu sperren, damit er während dem durch das Steuermittel 44 eingeleiteten Einschaltvorgang nicht auf Einschaltschwingungen anspricht. Durch einen zweiten Verzögerungskreis 56 wird ein Sperrsignal dem Auswertekreis 52 zugeführt, um denselben während etwa 0,2 s zu sperren, nachdem das Ausgangssignal des Einschaltverzögerungskreises 53 abgeschaltet wird, um zu verhindern, dass der Auswertekreis auf Ausschwingvorgänge anspricht, die unmittelbar nach dem Abschalten des Steuermittels 44 auftreten. Der erste Verzögerungskreis 55 spricht auf die Vorderflanke des vom Einschaltverzögerungskreis 53 erzeugten Signals an, während der zweite Verzögerungskreis auf die Rückflanke des genannte Signals anspricht.

Über die Anschlussklemme 26 kann ein Besetztsignal von einer anderen Steuereinrichtung 12 dem Eingang des Einschaltverzögerungskreises 53 über einen vorzugsweise PTC-Widerstand 57 zugeführt werden. Die Aufgabe dieses Besetztsignals ist weiter unten mit Bezugnahme auf die Fig. 7 näher beschrieben.

Die Arbeitsweise der in der Fig. 4 dargestellten Steuereinrichtung 12 ist nachstehend nochmals angeführt. Wenn sich keine der genannten Platten im Wirkungsbereich des Linearmotors 17 befindet, so ist auf dem Leiter 30 das binäre Signal "0" vorhanden, weil die Phasenbeziehung zwischen den beiden Messignalen 33 und 34 einen durch die Wahl des Wertes des Widerstandes 40 bestimmten Wert aufweist. Solange das Signal "0" auf dem Leiter 30 vorhanden ist, kann der Einschaltstromkreis 53 kein Signal an die Endstufe 49 und den ersten Verzögerungskreis 55 abgeben. Erst wenn eine der genannten Platten in den Wirkungsbereich des Linearmotors 17 eintritt, wird dadurch die Phase des Messignals 34 gegenüber des Messignals 33 verschoben, was durch den Auswertekreis 52 festgestellt wird. Dieser gibt daraufhin ein Signal "1" an den Leiter 30 und der Einschaltverzögerungskreis 53 erzeugt je nach Einstellung 0 bis 1,5 s danach ein Signal für die Endstufe 49, die bewirkt, dass der Triac 43 im Schaltstromkreis 21 leitend wird. Gleichzeitig wird über den Verzögerungskreis 55 der Auswertekreis 52 blockiert, damit dieser nicht auf die Einschwingvorgänge ansprechen kann.

Falls schon vor dem Erscheinen des Signals "1" auf dem Leiter 30 an der Anschlussklemme 26 ein Besetztsignal vorhanden ist, so kann der Einschaltverzögerungskreis 53 nicht auf das Signal "1" auf dem Leiter 30 ansprechen. Wenn das Besetztsignal an der Anschlussklemme 26 verschwindet, spricht der Einschaltverzögerungskreis 53 sofort an, wenn das Signal "1" weiterhin an der Leitung 30 auftritt.

Wenn die genannte Platte den Wirkungkreis des Linearmotors 17 verlässt, wird dadurch die Phasenverschiebung zwischen den beiden Messignalen 33 und 34 wieder rückgängig gemacht, was durch den Auswertekreis 52 festgestellt wird. Deshalb erscheint auf dem Leiter 30 wieder das Signal "0". Dadurch wird veranlasst, dass der Einschaltverzögerungskreis 53 kein Signal mehr an die Endstufe 49 abgibt, wodurch der Triac 43 nicht leitend wird und die Betriebsspannung für die Hauptwicklung 18 und die Hilfswicklung 19 des Linearmotors 17 abgeschaltet wird. Mit dem Verschwinden des Signals am Ausgang des Einschaltverzögerungskreises 53 erzeugt der zweite Verzögerungskreis 56 ein Sperrsignal für den Auswertekreis, welches diesem über den Leiter 31 zugeführt wird. Dieses Sperrsignal dauert etwa 0,2 s an und bewirkt, dass der Auswertekreis 52 nicht auf die durch das Abschalten der Betriebsspannung an den beiden Wicklungen des Linearmotors 17 auftretenden Ausschwingvorgänge anspricht.

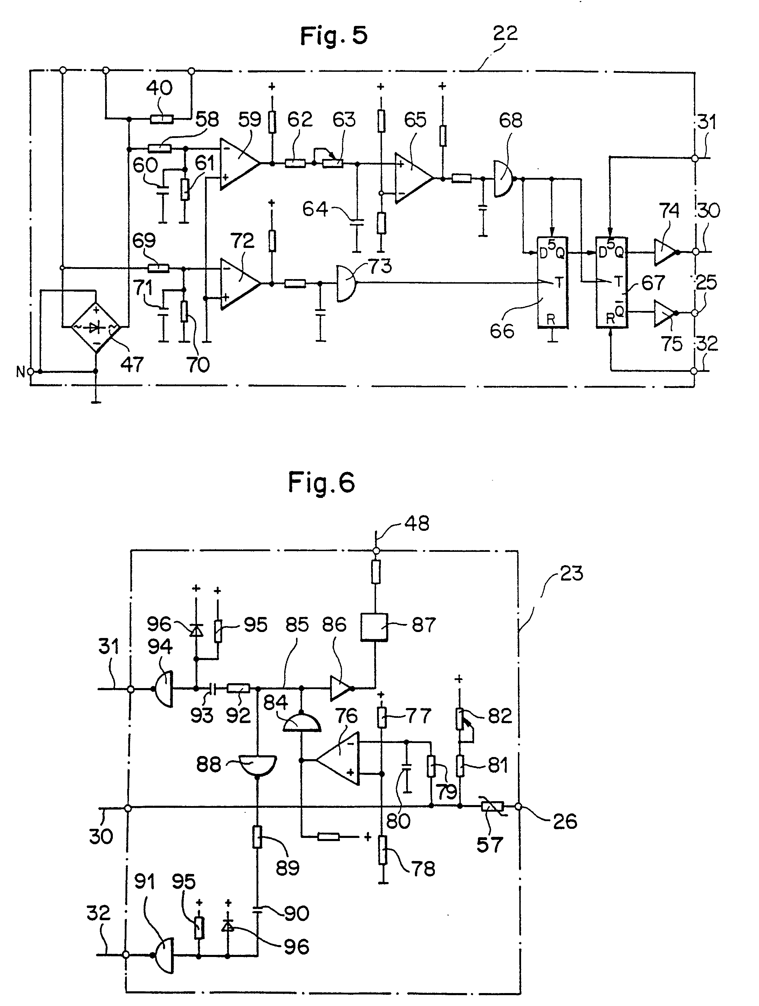

Die Fig. 5 zeigt das Schaltschema eines Ausführungsbeispiels des Überwachungsstromkreises 22 der Steuereinrichtung gemäss den Fig. 2 und 4. An der Gleichrichterbrückenschaltung 47 werden die Messignale 33 und 34 abgenommen. Das Messignal 33 wird über einen Widerstand 58 dem invertierenden Eingang eines Operationsverstärkers 59 zugeführt. Der Widerstand 58 und die Parallelschaltung aus einem Kondensator 60 und einem Widerstand 61 bilden das einfache Tiefpassfilter 50 und der Operationsverstärker 59 ist als invertierender Verstärker wirksam. Die Reihenschaltung aus einem Widerstand 62, einem einstellbaren Widerstand 63 und einem Kondensator 64 sowie ein Operationsverstärker 65, dessen nichtinvertierender Eingang an den Verbindungspunkt zwischen dem Kondensator 64 und dem einstellbaren Widerstand 63 angeschlossen ist, bilden die Verzögerungsschaltung 51, siehe Fig. 4.

Der Auswertekreis 52 umfasst zwei D-Flipflop 66 und 67. Das verzögerte Messignal 33 wird über einen Inverter 68 dem Dateneingang D und dem Setzeingang S des D-Flipflop sowie dem Takteingang T des D-Flipflop 67 zugeführt. Der Ausgang Q des D-Flipflop 66 ist mit dem Dateneingang D des D-Flipflop 67 verbunden. Das an der Gleichrichterbrückenschaltung 47 abgenommene zweite Messignal 34 wird über das einfache, durch Widerstände 79 und 70 sowie einen Kondensator 71 gebildetes Tiefpassfilter 52, einen Operationsverstärker 72 und einen Inverter 73 dem Takteingang D des D-Flipflop 66 zugeführt. Die Ausgänge Q und ˉQ des D-Flipflop 67 sind über invertierende Treiber 74 bzw. 75 mit offenen Kollektoren mit dem Leiter 30 bzw. der Anschlussklemme 25 verbunden. Der Setzeingang S des D-Flipflop 67 ist an den Leiter 31 und der Rücksetzeingang R an den Leiter 32 angeschlossen.

Am Ausgang Q des D-Flipflop 66 erscheint ein Rechtecksignal, wenn sich eine Platte im Wirkungsbereich des Linearmotors 17 befindet, und das binäre Signal "1", wenn sich keine Platte im genannten Wirkungsbereich befindet. Dementsprechend ist das Signal am Ausgang Q des D-Flipflop 67 das binäre Signal "1", wenn sich keine Platte im Wirkungsbereich des Linearmotors 17 befindet, und das Signal "0", wenn sich die Platte im genannten Wirkungsbereich befindet. Die an den Ausgängen Q und ˉQ des D-Flipflop 67 werden durch die Treiber 74 bzw. 75 invertiert, so dass beispielsweise auf dem Leiter 30 das Signal "1" vorhanden ist, wenn sich die Platte im genannten Wirkungsbereich befindet und gleichzeitig erscheint das Signal "0" an der Anschlussklemme 25.

Die Fig. 6 zeigt das Schaltschema eines Ausführungsbeispiels des Verzögerungsstromkreises 23. Der Einschaltverzögerungskreis 53 desselben umfasst einen Operationsverstärker 76, an dessen nicht invertierenden Eingang eine von einem Widerstände 77 und 78 aufweisenden Spannungsteiler erzeugte Bezugsspannung angelegt ist. Der Leiter 30 ist mit einem aus einem Widerstand 79 und einem Kondensator 80 gebildeten Zeitglied verbunden und der Verbindungspunkt zwischen dem Widerstand 79 und dem Kondensator 80 ist an den invertierenden Eingang des Operationsverstärkers 76 angeschlossen. Der Leiter 30 ist weiter über die Reihenschaltung eines Widerstandes 81 und eines einstellbaren Widerstandes 82 mit dem Pluspol des Gleichrichters 24 und über den PTC-Widerstand 57 mit der Anschlussklemme 26 verbunden.

Solange sich keine Platte im Wirkungsbereich des Linearmotors 17 befindet, ist das Signal auf dem Leiter 30 "0", d.h. der Ausgangstransistor des Treibers 74 ist leitend. Deshalb ist die Spannung am Verbindungspunkt zwischen den Widerständen 79 und 81 praktisch Null und der Kondensator 80 ist entladen. Dementsprechend ist das Ausgangssignal des Operationsverstärkers 76 gleich "0". Dieses Signal wird über einen Inverter 84 invertiert auf einen Leiter 85 abgegeben. Dieses invertierte Signal gelangt zu einem intervertierenden Treiber 86, dessen Ausgang an ein Erregermittel 87, beispielsweise eine Erregerspule eines Schutzrohrkontaktes oder einen Sender eines Optokopplers, angeschlossen ist. Der Treiber 86 und das Erregermittel 87 bilden zusammen die Endstufe 49, siehe Fig. 4. Das Erregermittel 87 bezieht seine Betriebsspannung über den Leiter 48 vom Gleichrichter 24.

Der Leiter 85 ist einerseits an einen Inverter 88 angeschlossen, dessen Ausgang über die Reihenschaltung eines Widerstandes 89 und eines Kondensators 90 mit dem Eingang eines Inverters 91 verbunden ist, und andererseits über eine weitere Reihenschaltung aus einem Widerstand 92 und einem Kondensator 93 mit einem Inverter 94 verbunden. Die Verbindungspunkte zwischen dem Kondensator 90 und dem Inverter 91 bzw. dem Kondensator 93 und dem Inverter 94 sind über je eine Parallelschaltung eines Widerstandes 95 und einer Diode 96 an den Pluspol des Gleichrichters 24 angeschlossen.

Die Inverter 88 und 91, der Widerstand 89 und der Kondensator 90 sowie die zugehörige Parallelschaltung aus dem Widerstand 95 und der Diode 96 bilden den ersten Verzögerungskreis 55 des Verzögerungsstromkreises 23, siehe auch Fig. 4. Der Inverter 94, der Kondensator 93 und der Widerstand 92 sowie die zugehörige Parallelschaltung des Widerstandes 95 und der Diode 96 bilden zusammen den zweiten Verzögerungskreis 56.

Der Inverter 91 erzeugt ein Sperrsignal von etwa 0,2 s Dauer, wenn das Signal am Ausgang des Operationsverstärkers 76 ansteigt, wobei dieses Sperrsignal über den Leiter 32 dem Rücksetzeingang R des D-Flipflop 67 des Überwachungsstromkreises 22 zugeführt wird. Der Inverter 94 erzeugt ein Sperrsignal von etwa 0,2 s Dauer, wenn das Signal am Ausgang des Operationsverstärkers 76 absinkt, wobei dieses Sperrsignal über den Leiter 31 dem Setzeingang S des D-Flipflop 67 zugeführt wird.

Wenn die Platte in den Wirkbereich des Linearmotors 17 eintritt, so wechselt das Signal auf dem Leiter 30 von "0" auf "1", d.h. der Ausgangstransistor des Treibers 74 wird nicht leitend. Dies hat zur Folge, dass der Kondensator 80 über die Widerstände 79, 81 und den einstellbaren Widerstand 82 aufgeladen wird, wenn kein Besetztsignal an der Anschlussklemme 26 anliegt. Nach einer durch den einstellbaren Widerstand 82 wählbaren Zeit von 0 - 1,5 s erreicht die Spannung am Kondensator 80 den Wert der oben genannten Bezugsspannung und die Ausgangsspannung am Ausgang des Operationsverstärkers 76 steigt schnell an. Dies bewirkt, dass das Signal "1" auf dem Leiter 85 auf "0" wechselt und das Erregermittel 87 erregt wird, was zur Folge hat, dass der Triac 43 im Schaltstromkreis 21 leitend wird und der Hauptwicklung 18 und der Hilfswicklung 19 des Linearmotors 17 die Betriebsspannung zugeführt und die Platte durch den Linearmotor 17 vorwärtsbewegt wird.

Der Signalwechsel von "1" auf "0" auf dem Leiter 85 bewirkt, dass der Inverter 91 das oben genannte Sperrsignal abgibt, dessen Dauer von dem Wert des Widerstandes 89 und des Kondensators 90 abhängig ist, während der Inverter 94 auf diesen Signalwechsel nicht reagiert.

Nachdem die Platte aus dem Wirkungsbereich des Linearmotors 17 bewegt worden ist, wird das Signal auf dem Leiter 30 wieder "0". Dies hat zur Folge, dass der Kondensator 80 über dem Widerstand 79 schnell entladen wird, wodurch die Spannung am invertierenden Eingang des Operationsverstärkers 76 unter die genannte Bezugsspannung sinkt, so dass die Ausgangsspannung des Operationsverstärkers 76 auf seinen ursprünglichen Wert zurückgeht. Dies bewirkt, dass auf dem Leiter 85 ein Signalwechsel von "0" auf "1" stattfindet. Darauffolgend gibt der Inverter 94 ein Sperrsignal über den Leiter 31 an den Setzeingang S des D-Flipflop 67 während einer Zeit ab, die durch den Kondensator 93 und den Widerstand 92 bestimmt ist. Dieses Sperrsignal hält das DFlipflop 67 im gesetzten Zustand, bis die durch das Abschalten der Betriebsspannung für die Hauptwicklung 18 und die Hilfswicklung 19 des Linearmotors durch den Triac 43 verursachten Ausschwingvorgänge abgeklungen sind. Der Inverter 91 reagiert auf den Signalwechsel von "0" auf "1" auf dem Leiter 85 nicht, jedoch wird das Erregermittel 87 entregt, wodurch die bereits genannte Abschaltung der Betriebsspannung durch den Triac 43 erfolgt.

Liegt an der Anschlussklemme 26 aus einem weiter unten mit Bezug auf die Fig. 7 beschriebenen Grund ein Besetztsignal in der Form eines binären Signals "0" an, so erfolgt keine Aufladung des Kondensators 80 des Verzögerungsstromkreises 23, selbst dann nicht, wenn der Treiber 74 durch das Ausgangssignal am Ausgang Q des D-Flipflop 67 angesteuert wird.

Die Fig. 7 zeigt in grober schematischer Darstellung einen Teil einer Anlage mit vier hintereinander angeordneten Linearmotoren 17, 17a, 17b und 17c samt den zugehörigen Steuervorrichtungen 12, 12a, 12b und 12c. Die Linearmotoren 17 bis 17c besitzen selbstverständlich je eine Hauptwicklung und eine Hilfswicklung, obwohl in der Fig. 7 nur eine Wicklung gezeichnet ist. Weiter sind nur die Platten 4' und 4" dargestellt. Die dazugehörigen Fahrwerke wurden der Einfachheit wegen nicht gezeichnet. Die allgemeine Bewegungsrichtung der Platten 4' und 4" ist durch einen Pfeil 97 angedeutet.

In der in der Fig. 7 dargestellten Situation befindet sich die Platte 4" im Wirkungsbereich des Linearmotors 17b. Die Steuereinrichtung 12b hat dies festgestellt und das zugehörige Schaltmittel 35 ist geschlossen bzw. leitend, so dass der Linearmotor 17b aktiv ist und die Platte 4" in Richtung des Pfeiles 97 antreibt, weil an der Anschlussklemme 26 der Steuereinrichtung 12b kein Besetztsignal vorhanden ist. Der Überwachungsstromkreis 22 der Steuereinrichtung 12b erzeugt ein Besetztsignal und gibt dieses über die Ausgangsklemme 25, einen Verbindungsleiter 98, den Leiter 28 der Steuereinrichtung 12a und einen weiteren Verbindungsleiter 99 an die Anschlussklemme 26 der Steuereinrichtung 12. Dieses Besetztsignal blockiert den Verzögerungsstromkreis 23 der Steuereinrichtung 12, wodurch das Einschalten des zugehörigen Linearmotors 17 verhindert wird, obwohl sich die Platte 4' im Wirkungsbereich dieses Linearmotors 17 befindet. Dies hat der Überwachungsstromkreis 22 der Steuereinrichtung 12 natürlich festgestellt, und gibt daher ein Besetztsignal zur Ausgangsklemme 25 der Steuereinrichtung 12. Dieses Besetztsignal wird auf die gleiche Weise, wie oben mit Bezug auf das Besetztsignal der Steuereinrichtung 12b zu einer in der Fig. 7 nicht dargestellten, vorangehenden Steuereinrichtung weitergeleitet.

Die sich unter dem Linearmotor 17 vorbeibewegende Platte 4' wird dementsprechend nicht beschleunigt, es sei denn, dass die Platte 4" den Wirkungsbereich des Linearmotors 17b verlässt, bevor die Platte 4' sich aus dem Wirkungsbereich des Linearmotors 17 bewegt hat. Dann wird nämlich das durch die Steuereinrichtung 12b erzeugte Besetztsignal abgeschaltet und nach Ablauf der im Verzögerungskreis 23 der Steuereinrichtung 12 eingestellten Einschaltverzögerung wird der Linearmotor 17 eingeschaltet, sofern sich die Platte 4' noch in dessen Wirkbereich befindet.

Sobald die Platte 4" in den Wirkbereich des Linearmotors 17c eintritt, wird dies vom Überwachungsstromkreis 22 der Steuereinrichtung 12c festgestellt und diese erzeugt ein Besetztsignal, das über die Anschlussklemme 25 der Steuereinrichtung 12c, eine Verbindungsleitung 100, den Leiter 28 der Steuereinrichtung 12b, einen Verbindungsleiter 101 und die Anschlussklemme 26 dem Verzögerungsstromkreis 23 der Steuereinrichtung 12a zugeführt wird. Damit wird verhindert, dass der Linearmotor 17a aktiviert wird, so dass die in den Wirkbereich desselben eintretende Plate 4' nicht beschleunigt wird, solange sich die Plate 4" im Wirkbereich des Linearmotors 17c befindet.

Die oben beschriebene Beschaltungsart kann für die ganze Fahrstrecke einer Anlage verwendet werden, sie wird jedoch mit besonderem Vorteil auf sogenannten Stapelstrecken vor Weichen- oder Kettenantrieben eingesetzt. Mit dieser Beschaltungsart wird verhindert, dass die Fahrwerke hart aufeinanderprallen. Überdies werden nur jene Linearmotoren eingeschaltet, die unbedingt erforderlich sind. Dies ergibt eine entscheidende Einsparung an Energie. Beim Stapeln erfolgt ein behutsames Auffahren der Fahrwerke und beim Weiterfahren werden die Fahrwerke vereinzelt, was auch auf der normalen Fahrstrecke der Fall ist.

Das Besetztsignal kann auch der unmittelbar nachfolgenden Steuereinrichtung zugeführt werden. Die Einschaltverzögerung, verursacht durch den Verzögerungsstromkreis 23, ist einstellbar und beeinflusst die durchschnittliche Geschwindigkeit der Fahrwerke. Eine grosse Einschaltverzögerung ergibt eine kleine durchschnittliche Geschwindigkeit und eine kleine Einschaltverzögerung ergibt eine grosse durchschnittliche Geschwindigkeit.

**Patentansprüche**

1. Steuereinrichtung für einen elektromagnetischen Linearmotor (17) mit einer Hauptwicklung (18) und einer Hilfswicklung (19), an die, mit Hilfe eines in einem Schaltstromkreis (21) angeordneten Schaltmittels (35; 43), eine Betriebsspannung zum Antreiben von mit je einer als Anker für den Linearmotor (17) dienenden Platte versehenen Fahrzeugen anlegbar ist, gekennzeichnet durch einen Überwachungsstromkreis (22) mit einem ersten Mittel (38, 39) zum Erzeugen eines ersten, von dem durch die genannte Hauptwicklung (18) fliessenden Strom abhängigen Messignals (33), einem zweiten Mittel (41, 42) zum Erzeugen eines zweiten, von dem durch die genannte Hilfswicklung (19) fliessenden Strom abhängigen Messignals (34) und einem auf eine Phasenverschiebung zwischen den Messignalen (33, 34) ansprechenden Auswertekreis (52) zum Erzeugen eines Schaltsignals und eines Besetztsignals, wenn sich die genannte Platte im Wirkbereich des Linearmotors (17) befindet, und durch einen Verzögerungsstromkreis (23) zum Verzögern der Weitergabe des Schaltsignals an das genannte Schaltmittel (35, 43) im Schaltstromkreis (21).

2. Steuereinrichtung nach Anspruch 1, dadurch gekennzeichnet, dass der Verzögerungsstromkreis (23) einen Einschaltverzögerungskreis (53) mit einstellbarer Verzögerungszeit und eine daran angeschlossene Endstufe (49) zum Betätigen des Schaltmittels (43) im Schaltstromkreis (21) in Abhängigkeit des verzögerten Schaltsignals und eine Anschlussklemme (26) zum Zuführen eines Besetztsignals und Sperren des Einschaltverzögerungskreises (53) aufweist.

3. Steuereinrichtung nach Anspruch 2, dadurch gekennzeichnet, dass der Verzögerungsstromkreis (23) einen ersten auf die Vorderflanke des verzögerten Schaltsignals ansprechenden Verzögerungskreis (55) zum Sperren des Auswertekreises (52) während der beim Einschalten des Linearmotors (17) auftretenden Einschwingvorgänge und einen zweiten, auf die Rückflanke des verzögerten Schaltsignals ansprechenden Verzögerungskreis (56) zum Sperren des Auswertekreises (52) während der beim Abschalten des Linearmotors (17) auftretenden Ausschwingvorgänge umfasst.

4. Steuereinrichtung nach einem der vorangehenden Ansprüche 1 bis 3, dadurch gekennzeichnet, dass das erste Mittel zwei antiparallel geschaltete Dioden (38, 39) umfasst, welche Parallelschaltung zum Inreiheschalten mit der Hauptwicklung (18) des Linearmotors (17) bestimmt ist, und dass das zweite Mittel zwei antiparallelgeschaltete Dioden (41, 42) umfasst, welche Parallelschaltung zum Inreiheschalten mit der Hilfswicklung (19) des Linearmotors (17) bestimmt ist.

5. Steuereinrichtung nach Anspruch 4, dadurch gekennzeichnet, dass zum Schaltmittel (35; 43) im Schaltkreis (21) eine Reihenschaltung aus einem Widerstand (36) und einem Kondensator (37) parallel geschaltet ist, welche Reihenschaltung als Schutz für das Schaltmittel und zum Erhalten eines Stromflusses durch die Haupt- und Hilfswicklung des Linearmotors (17) auch bei ausgeschaltetem bzw. nichtleitendem Schaltmittel dient.

6. Steuereinrichtung nach einem der vorangehenden Ansprüche 1 bis 5, dadurch gekennzeichnet, dass parallel zur Reihenschaltung aus dem Schaltmittel (35; 43) und der Hauptwicklung (18) des Linearmotors (17) ein Widerstand (40) zum Gleichsetzen der Phase bei ein- und ausgeschaltetem Schaltmittel (35) liegt.

7. Steuereinrichtung nach einem der vorangehenden Ansprüche 1 bis 6, dadurch gekennzeichnet, dass der Auswertekreis (52) zwei D-Flipflop (66, 67) aufweist, dass der Ausgang des einen D-Flipflop (66) mit dem Dateneingang des anderen D-Flipflop verbunden ist, dass das erste Messignal dem Dateneingang und dem Setzeingang des einen D-Flipflop (66) sowie dem Takteingang des anderen D-Flipflop (67) zugeführt und das zweite Messignal (34) dem Takteingang des einen D-Flipflop (66) zugeleitet wird, und dass an jedem der beiden Ausgänge des anderen D-Flipflop (67) je ein invertierender Treiber (74, 75) angeschlossen ist, wobei am Ausgang des einen Treibers (74) das Schaltsignal und am Ausgang des anderen Treibers (75) das Besetztsignal erscheint, wenn sich eine der genannten Platten im Wirkbereich des Linearmotors (17) befindet.

8. Anlage mit mehreren längs der Fahrbahn von Fahrzeugen hintereinander angeordneten Steuereinrichtungen nach Anspruch 2, dadurch gekennzeichnet, dass eine Anschlussklemme (25) des Überwachungsstromkreises (22) mindestens einer der Steuereinrichtungen (12b) mit der Anschlussklemme (26) zum Zuführen des Besetztsignals von der ersten oder zweiten vorangehenden Steuereinrichtung (12a; 12) verbunden ist.

**Claims**

1. Control apparatus for an electro-magnetic linear motor (17) having a main winding (18) and an auxiliary winding (19), to which, with the aid of a switching means (35; 43) disposed in a switching circuit (21), an operating voltage can be applied for driving vehicles each provided with a plate serving as an armature for the linear motor (17), characterized by a monitoring circuit (22) having a first means (38, 39) for producing a first measuring signal (33) dependent upon the current flowing through the said main winding (18), a second means (41, 42) for producing a second measuring signal (34) dependent upon the current flowing through the said auxiliary winding (19), and an evaluating circuit (52) responding to a phase shift between the measuring signals (33, 34) for producing a switching signal and a busy signal when the said plate is situated in the active range of the linear motor (17), and by a delay circuit (23) for delaying the retransmission of the switching signal to the said switching means (35, 43) in the switching circuit (21).

2. Control apparatus according to claim 1, characterized in that the delay circuit (23) has a make-delaying circuit (53) with adjustable delay time and a final stage (49) connected thereto for actuating the switching means (43) in the switching circuit (21) as a function of the delayed switching signal, and a terminal (26) for supplying a busy signal and blocking the make-delaying circuit (53).

3. Control apparatus according to claim 2, characterized in that the delay circuit (23) comprises a first delay circuit (55) responding to the leading edge of the delayed switching signal for blocking the evaluating circuit (52) during the transients occurring upon switching-on the linear motor (17), and a second delay circuit (56) responding to the trailing edge of the delayed switching signal for blocking the evaluating circuit (52) during the decay phenomena occurring upon switching-off the linear motor (17).

4. Control apparatus according to one of the preceding claims 1 to 3, characterized in that the first means comprises two diodes (38, 39) connected in antiparallel, which parallel connection is intended for series connection with the main winding (18) of the linear motor (17), and that the second means comprises two diodes (41, 42) connected in antiparallel, which parallel connection is intended for series connection with the auxiliary winding (19) of the linear motor (17).

5. Control apparatus according to claim 4, characterized in that a series connection of a resistor (36) and a capacitor (37) is connected in parallel to the switching means (35; 43) in the switching circuit (21), which series connection serves as protection for the switching means and for maintaining a current flow through the main and auxiliary windings of the linear motor (17) even in the case of switched-off or non-conductive switching means.

6. Control apparatus according to one of the preceding claims 1 to 5, characterized in that a resistor (40) for equating the phase, with switching means (35) switched on and off, lies parallel to the series connection of the switching means (35; 43) and the main winding (18) of the linear motor (17).

7. Control apparatus according to one of the preceding claims 1 to 6, characterized in that the evaluating circuit (52) has two D-type flip-flops (66, 67), that the output of the one D-type flip-flop (66) is connected to the data input of the other D-type flip-flop, that the first measuring signal is supplied to the data input and the set input of the one D-type flip-flop (66), as well as to the clock input of the other D-type flip-flop (67), and the second measuring signal (34) is led to the clock input of the one D-type flip-flop (66), and that a respective inverting driver (74, 75) is connected to each of the two outputs of the other D-type flip-flop (67), the switching signal appearing at the output of the one driver (74) and the busy signal at the output of the other driver (75) when one of the said plates is situated in the active range of the linear motor (17).

8. Installation having several control apparatus according to claim 2 disposed in succession along the roadway of vehicles, characterized in that a terminal (25) of the monitoring circuit (22) of at least one of the control apparatus (12b) is connected to the terminal (26) for supplying the busy signal from the first or second previous control apparatus (12a; 12).

## Revendications

1. Dispositif de commande pour un moteur linéaire électromagnétique (17) comprenant un bobinage principal (18) et un bobinage auxiliaire (19) auxquels est applicable, à l'aide d'un moyen commutateur (35, 43) disposé dans un circuit commutateur (21), une tension de fonctionnement pour entraîner des véhicules munis chacun d'une plaque servant d'armature pour le moteur linéaire (17), caractérisé par un circuit de surveillance (22) comprenant un premier moyen (38, 39) pour engendrer un premier signal de mesure (33) dépendant du courant circulant à travers ledit bobinage principal (18), un second moyen (41, 42) pour engendrer un second signal de mesure (34) dépendant du courant circulant à travers ledit bobinage auxiliaire (19) et un circuit d'évaluation (52) réagissant à un décalage de phase entre les deux signaux de mesure (33, 34) pour engendrer un signal de commutation et un signal d'occupation lorsque ladite plaque se trouve dans le domaine d'action du moteur linéaire (17), et par un circuit de retard (23) pour retarder la transmission du signal de commutation audit moyen commutateur (35, 43) dans le circuit commutateur (21).

2. Dispositif selon la revendication 1, caractérisé en ce que le circuit de retard (23) comprend un circuit d'enclenchement retardé (53) à temps de retard réglable et, connecté à celui-ci, un étage de sortie (49) pour l'actionnement du moyen commutateur (43) dans le circuit commutateur (21) en dépendance du signal de commutation retardé, et une borne de raccordement (26) pour l'amenée d'un signal d'occupation et le blocage du circuit d'enclenchement retardé (53).

3. Dispositif selon la revendication 2, caractérisé en ce que le circuit de retard (23) comprend un premier circuit de retard (55) réagissant au flanc avant du signal de commutation retardé pour bloquer le circuit d'évaluation (52) pendant le processus d'entrée en auxiliation intervenant lors de l'enclenchement du moteur linéaire (17), et un deuxième circuit de retard (56) réagissant au flanc arrière du signal de commutation retardé pour bloquer le circuit d'évaluation (52) pendant le processus d'oscillation intervenant lors du déclenchement du moteur linéaire (17).

4. Dispositif selon une des revendications précédentes 1 à 3, caractérisé en ce que le premier moyen comprend deux diodes (38, 39) connectées en antiparallèle, ce groupement parallèle étant destiné à être branché en série avec le bobinage principal (18) du moteur linéaire (17), et en ce que le second moyen comprend deux diodes (41, 42) connectées en antiparallèle, ce groupement parallèle étant destiné à être branché en série avec le bobinage auxiliaire (19) du moteur linéaire (17).

5. Dispositif selon la revendication 4, caractérisé en ce que ledit moyen commutateur (35, 43) dans le circuit commutateur (21) est branché en parallèle avec le groupement série d'une résistance (36) et d'un condensateur (37), ce groupement série servant en tant que protection pour le moyen commutateur de même que pour le maintien de la circulation d'un courant à travers les bobinages principal et auxiliaire du moteur linéaire (17) également lorsque le moyen commutateur se trouve déclenché ou à l'état non conducteur.

6. Dispositif selon une des revendications précédentes 1 à 5, caractérisé en ce que, en parallèle avec le groupement série comprenant le moyen commutateur (35, 43) et le bobinage principal (18) du moteur linéaire (17), se trouve branchée une résistance (40) pour le maintien en correspondance des phases lorsque le moyen commutateur (35) est enclenché et déclenché.

7. Dispositif selon une des revendications précédentes 1 à 6, caractérisé en ce que le circuit d'évaluation (52) comprend deux flipflops D (66, 67), en ce que la sortie d'un des flipflops D (66) est reliée avec l'entrée de données de l'autre flipflop D, en ce que le premier signal de mesure est amené à l'entrée de données et à l'entrée de mise à l'état de travail du premier flipflop D (66) de même qu'à l'entrée de cadencement de l'autre flipflop D (67), et en ce que le second signal de mesure (34) est amené à l'entrée de cadencement du premier flipflop D (66), et en ce que, a chacune des deux sorties de l'autre flipflop D (67), se trouve connecté un entraîneur inverseur (74, 75), le signal de commutation étant pris à la sortie d'un entraîneur (74) tandis que le signal d'occupation apparaît à la sortie de l'autre entraîneur (75), lorsqu'une desdites plaques se trouve dans le domaine d'action du moteur linéaire (17).

8. Installation comprenant plusieurs dispositifs de commande selon la revendication 2 le long de la voie de circulation de véhicules, caractérisée en ce qu'une borne de connexion (25) du circuit de surveillance (22) d'au moins un des dispositifs de commande (12b) est connectée avec la borne de connexion (26) pour l'amenée du signal d'occupation du premier ou du deuxième dispositif de commande précédent (12a, 12).

# Fig. 1

EP 0 198 799 B1

## Fig. 2

Linear-Motor 17

Schalt=stromkreis 21

Verzögerungs=stromkreis 23

Gleichrichter 24

Ueberwachungs=stromkreis 22

## Fig. 3

Fig. 4

EP 0 198 799 B1

## Fig. 5

## Fig.6

Fig. 7

EP 0 198 799 B1